# FASCICULE DE BREVET EUROPEEN

(11) **EP 2 335 956 B1**
(45) Date de publication et mention de la délivrance du brevet: **27.03.2013**
(21) Numéro de dépôt: 10195191.1
(22) Date de dépôt: 15.12.2010
(51) Int. Cl.: B60J 1/20, B60J 7/00, B60R 5/04, E06B 9/40, E06B 9/58

(54) **Dispositif d'occultation, véhicule et procédé de fabrication correspondants**
Abdeckvorrichtung, Fahrzeug und korrespondierendes Herstellungsverfahren
Blind, corresponding vehicle and manufacturing method

(30) Priorité: 15.12.2009 FR 0959021
(43) Date de publication de la demande: 22.06.2011
(73) Titulaire: Advanced Comfort Systems France SAS ACS France SAS, 79302 Bressuire Cedex (FR)
(72) Inventeur: Jincheleau, Michel, 79320 Moncoutant (FR)
(74) Mandataire: Bioret, Ludovic

(56) Documents cités:
- EP-A1- 1 840 321
- EP-A1- 1 987 973
- EP-A2- 1 491 712
- WO-A1-2008/101883
- WO-A2-2006/053520
- DE-A1- 10 339 583
- DE-A1-102004 041 385
- DE-A1-102005 038 373

## Description

Le domaine de l'invention est celui des dispositifs d'occultation d'une surface à occulter. On entend notamment par surface à occulter une surface transparente ou translucide, par exemple vitrée (que l'on peut occulter, complètement ou partiellement, par exemple pour se protéger du soleil, ou pour dissimuler l'intérieur d'un véhicule ou d'un bâtiment), ou plus généralement susceptible de devoir être recouverte (par exemple dans le cas d'un cache-bagages).

Plus précisément, l'invention concerne les stores à enrouleur, du type mettant en oeuvre une toile d'occultation montée sur un tube enrouleur et mobile entre une position repliée et au moins une position déployée, en particulier, mais non exclusivement, pour une baie de véhicule ferroviaire, automobile, autobus, cabine de camion, ou pour une ouverture d'un bâtiment d'habitation.

En particulier, l'invention concerne le guidage et le maintien de tels stores, lorsqu'ils sont déployés, notamment lorsque la surface à occulter est de grande dimension et/ou non plane.

Des stores à enrouleur sont utilisés depuis longtemps, pour occulter des surfaces de véhicules ferroviaires ou automobiles par exemple. La mise en oeuvre de tels stores, par exemple pour l'occultation d'un pavillon vitré, est cependant complexe. En effet, si l'on déploie une toile présentant une grande largeur et une grande longueur, celle-ci se déforme, poche, sous l'effet de la gravité. En outre, les baies latérales, les pare-brises et/ou les pavillons des véhicules automobiles ou ferroviaires ne sont souvent pas plans, mais au contraire galbés ou incurvés.

Pour assurer le guidage et le maintien des stores, notamment dans ces situations, on utilise souvent des rails latéraux dans lesquels les bords latéraux de la toile sont guidés et maintenus. Notamment, il est connu de prévoir une bordure ou un renfort disposé sur toute la longueur des bords de toile. Cette bordure peut être constituée par un bourrelet surmoulé le long de chaque bord de la toile d'occultation. Cette technique est par exemple décrite dans le document de brevet US-2009/0178771-A1, qui présente plusieurs solutions envisageables.

Une telle solution présente cependant plusieurs inconvénients. Notamment, elle induit des frottements importants, générateurs de bruits, d'usure et de risques de blocage. Il est en effet nécessaire que cette bordure soit parfaitement ajustée avec l'intérieur du rail, et reste ajustée même après de nombreuses manipulations, et le cas échéant des actions involontaires sur la barre de tirage et/ou la toile, pouvant par exemple mettre la barre de tirage de travers, ou générer des plis sur la toile.

Ceci n'est pas toujours compatible avec le domaine de la construction de véhicules, qui exige une forte tolérance aux jeux de montage et de fonctionnement, et une bonne durée dans le temps.

En outre, si la mise en oeuvre de tels éléments continus peut être adapté dans le cadre de stores à rails de guidage rectilignes ou peu incurvés, elle ne peut pas être mise en oeuvre dans le cas de galbes importants, tels que peuvent en présenter certains pavillons vitrés ou certaines baies de wagon, notamment dans le sens de déploiement de la toile d'occultation. Dès que le rayon/galbe d'un pavillon vitré et/ou d'un pare-brise est important, il apparaît un risque fort de mauvais enroulement et de blocage des stores à éléments de renfort continus.

Un autre inconvénient de ces techniques connues est qu'elles génèrent un bruit de fonctionnement important, dû notamment aux frottements lors du coulissement et aux chocs contre les rails.

Une autre technique de guidage des stores est suggérée (mais considérée inadaptée) dans le document US-2009/0178771-A1 susmentionné (voir figure 1). Cette approche consiste à accrocher, de façon espacée, des éléments en forme de perle sur les bords de la toile.

Un inconvénient de cette technique de l'art antérieur, qui est d'ailleurs souligné dans la demande de brevet susmentionnée, est que l'assemblage des perles à la toile est long et complexe, car il nécessite d'accrocher les perles une à une sur les bord de la toile. De plus, une perle peut se détacher, entraînant des blocages et des détériorations.

En outre, l'espacement de ces perles ne permet pas de garantir une distance constante entre deux perles lors de l'enroulement ou le déroulement du store. Au contraire, une perle peut se bloquer, la suivante se rapprochant alors de celle-ci, ce qui génère des plis dans la toile et éventuellement des blocages du store. Cette approche n'est donc pas adaptée pour garantir un maintien et un guidage efficace et pérenne.

Une autre technique de guidage de stores est illustrée dans le document de brevet WO 2008/101883. Elle consiste à solidariser les bords de la toile avec une gaine comprenant une chaîne constituée d'éléments en forme de boules. Une telle approche nécessite cependant un assemblage de la gaine avec la chaîne de boules qui est techniquement complexe à mettre en oeuvre.

Encore une autre technique de guidage de stores est présentée dans le document de brevet DE 10 339 583. Cette technique repose sur la mise en oeuvre d'un rail de guidage disposant d'une pièce de guidage supplémentaire formée dans un matériau permettant de réduire les bruits de frottement avec les éléments de renfort disposés sur les bords latéraux de la toile. Ce rail de guidage est de conception complexe et ne permet pas une utilisation aisée du store d'occultation, en particulier lorsqu'il s'agit d'insérer les bords latéraux dans le rail de guidage.

L'invention a notamment pour objectif de pallier ces inconvénients de l'art antérieur.

Plus précisément, un objectif de l'invention est de fournir une technique qui permette d'imprimer simplement et efficacement à une toile d'occultation les galbes que peut présenter une surface vitrée, dans la direction de déplacement de la toile d'occultation.

L'invention a ainsi pour objectif de proposer un store d'occultation qui permette le déploiement de la toile sans générer de plis dans la toile et de déformations, sous l'effet de la gravité, sources de blocages de l'enroulement de la toile.

L'invention a également pour objectif de fournir une telle technique qui permette de déployer une toile d'occultation au plus près d'une surface vitrée non plane.

Un objectif supplémentaire de l'invention est de fournir un tel store d'occultation qui soit ergonomique et d'utilisation aisée et instinctive.

Un autre objectif de l'invention est de fournir un tel store d'occultation qui soit simple de conception et facile à mettre en oeuvre.

Encore un autre objectif de l'invention est de fournir une technique de guidage d'un store qui soit fiable et robuste, simple à mettre en oeuvre et peu onéreuse.

Ces objectifs, ainsi que d'autres qui apparaîtront par la suite, sont atteints grâce à l'invention qui a pour objet un dispositif d'occultation d'au moins une partie d'une surface à occulter, par exemple une surface vitrée, comprenant au moins une toile d'occultation mobile selon un axe de déploiement entre une position repliée et au moins une position déployée, dont une extrémité est montée sur un tube enrouleur, les bords latéraux de ladite toile d'occultation étant chacun guidés dans des rails de guidage et de maintien.

Selon l'invention, lesdits rails de guidage et de maintien comprennent une partie en plastique avec une fente insérée dans une partie métallique et débordant de la partie métallique, et chacun des bords latéraux de ladite toile porte une série d'éléments de guidage et de maintien discontinus, aptes à circuler dans ladite partie en plastique d'un desdits rails, la largeur desdits éléments de guidage et de maintien, dans une direction parallèle à l'axe d'un rail, étant comprise entre 0,5 mm et 5 mm, et l'épaisseur desdits éléments de guidage et de maintien étant comprise entre 0,5 mm et 5 mm, et supérieure à la largueur de ladite fente.

Cette combinaison de parties en plastique et en métal présente l'avantage de conserver l'avantage d'un rail plastique (faible frottement et faible bruit) tout en garantissant une bonne précision de l'ouverture de la fente ménagée dans le rail, contrôlée par le profil métallique. En outre, le profil plastique dépassant du profil métallique permet de faciliter l'insertion des éléments de guidage et de maintien.

Selon un mode de réalisation particulier, ladite série d'éléments de guidage et de maintien est solidarisée à une bande souple solidaire de ladite toile et traversant une fente ménagée dans ledit rail.

Ainsi, on solidarise sur chaque bord de la toile d'occultation une bande souple, en tissu par exemple, sur laquelle sont fixés des éléments de guidage et de maintien. La forme des éléments de guidage et de maintien est choisie de telle sorte qu'ils puissent circuler dans une fente ou rainure ménagée dans des rails latéraux de guidage de la toile d'occultation, et être correctement guidés et maintenus dans les rails sans pouvoir en être retiré.

L'utilisation d'éléments de guidage et de maintien discontinu permet de garantir un enroulement et un déploiement de la toile qui ne génèrent pas de plis dans la toile et/ou de blocage du mécanisme d'enroulement de la toile.

Par ailleurs, l'utilisation d'une bande souple supportant les éléments de guidage et de maintien facilite le montage de ces éléments sur les bords de la toile d'occultation.

Le fait que la bande souple traverse une fente ménagée dans le rail, permet d'éviter que la toile soit écartée des canaux de guidage de manière aisée par des courants d'air ou des actes volontaires (actes de vandalisme ou de curiosité notamment).

Dans un mode de réalisation particulier de l'invention, l'espace entre deux éléments de guidage et de maintien consécutifs est inférieur ou égal à ladite largeur des éléments de guidage et de maintien.

Avantageusement, lesdits éléments de guidage et de maintien s'étendent sensiblement sur toute la longueur de ladite toile d'occultation.

Ainsi, les galbes que peut présenter la surface vitrée, notamment dans le sens de déploiement de la toile d'occultation, peuvent être imprimés simplement et efficacement à la toile d'occultation, sans que celle-ci tende à s'étendre dans un plan, poche sous l'effet de gravité, forme des plis et/ou se bloque.

Préférentiellement, lesdites bandes souples sont solidarisées à ladite toile d'occultation par l'une au moins des techniques parmi le collage, le soudage, le thermosoudage et le piquage.

Les bandes souples, et par conséquent les éléments de guidage et de maintien, peuvent alors être solidarisé efficacement à la toile de façon simple et peu coûteuse.

Dans un mode de réalisation avantageux de l'invention, une desdites bandes souples et lesdits éléments de guidage et de maintien correspondant constituent une demi-fermeture à glissière.

Une telle solution est fiable et robuste, simple à mettre en oeuvre et peu onéreuse.

De façon préférentielle, les demi-fermetures à glissière solidarisées aux deux bords latéraux de ladite toile sont symétriques.

Une forme symétrique de dents de guidage et de maintien permet d'obtenir un déplacement similaire, dans les deux sens de déplacement de la toile.

Préférentiellement, au moins un desdits rails présentent une portion d'extrémité, au voisinage du tube enrouleur de ladite toile, se rapprochant de ladite toile, de façon à faciliter l'introduction des éléments de guidage et de maintien dans ledit rail.

Dans ce cas, ladite partie en plastique déborde d'une extrémité de la partie métallique, pour former ladite portion d'extrémité.

Ainsi, le profil plastique dépasse de l'extrémité du profil métallique et est légèrement galbé de façon à revenir vers la toile, pour former un « entonnoir », facilitant l'insertion de la demi-fermeture à glissière (et plus précisément des dents, ou plus généralement des éléments de guidage et de maintien), et limiter ainsi le bruit de frottement de celle-ci.

Avantageusement, lesdits rails sont courbes, pour suivre le profil d'une surface vitrée galbée.

Selon un autre aspect de l'invention, le dispositif comprend deux câbles d'équilibrage circulant symétriquement dans une barre de tirage de ladite toile et dans lesdits rails, et permettant un maintien de ladite barre de tirage dans toute position déployée.

Ainsi, on peut prévoir un système d'équilibrage de la barre de tirage, à l'aide de câbles d'équilibrage circulant dans les rails et la barre de tirage. Cette approche permet d'obtenir de façon simple et efficace la possibilité d'arrêter la barre de tirage en toutes positions le long des rails.

Le dispositif d'occultation de l'invention peut notamment être mis en oeuvre pour occulter au moins une portion :
- d'un pavillon en verre ;
- d'un toit ouvrant ;
- d'une vitre latérale ;
- d'une vitre de hayon arrière ;
- d'un coffre à bagages ;
- d'une surface vitrée d'un véhicule ferroviaire.

De façon avantageuse ladite toile est montée sur un tube enrouleur dont le diamètre est réduit au niveau où s'enroulent lesdites bandes souples et/ou lesdits éléments de guidage et de maintien.

L'invention concerne également les véhicules automobiles ou ferroviaires équipés d'au moins un dispositif d'occultation tel que décrit précédemment.

L'invention concerne également un procédé de fabrication d'un dispositif d'occultation tel que décrit précédemment comprenant les étapes suivantes :
- obtention de deux rails de guidage et de maintien, présentant une fente de passage, comprenant, pour chaque rail, les étapes suivantes :
- obtention d'une partie de rail en plastique avec une fente, par exemple par extrusion ;
- obtention d'une partie de rail métallique ;
- insertion de ladite partie de rail en plastique dans ladite partie de rail métallique de sorte que ladite partie de rail en plastique déborde de ladite partie de rail métallique ;
- solidarisation à une toile d'occultation d'une série d'éléments de guidage et de maintien discontinus, aptes à circuler dans un desdits rails,
- montage de ladite toile d'occultation de façon que lesdits éléments de guidage et de maintien puissent circuler à l'intérieur dudit rail,
la largeur desdits éléments de guidage et de maintien, dans une direction parallèle à l'axe d'un rail, étant comprise entre 0,5 mm et 5 mm, et l'épaisseur desdits éléments de guidage et de maintien étant comprise entre 0,5 mm et 5 mm et supérieure à la largueur de ladite fente.

Dans un mode de réalisation particulier de l'invention, ladite étape de solidarisation comprend une solidarisation de deux bandes souples à ladite toile, lesdites bandes souples portant chacune une série d'éléments de guidage et de maintien discontinus, et en ce que ladite étape de montage est effectuée de façon que chacune desdites bandes souples traverse la fente du rail correspondant.

D'autres caractéristiques et avantages de l'invention apparaîtront plus clairement à la lecture de la description suivante d'un mode de réalisation préférentiel de l'invention, donné à titre d'exemple illustratif et non limitatif, et des dessins parmi lesquels :
- la figure 1 illustre une vitre galbée, pouvant être équipée d'un dispositif d'occultation selon l'invention ;
- la figure 2 est une vue d'ensemble en perspective d'un dispositif d'occultation selon l'invention, adapté par exemple à la vitre de la figure 1 ;
- la figure 3 est une vue de détail, en perspective, d'un mode de réalisation d'un rail de guidage du dispositif d'occultation de la figure 2 ;
- la figure 4A est une vue schématique, selon une coupe A-A de la figure 2, montrant la position d'un élément de guidage et de maintien dans un rail de guidage selon l'invention ;
- la figure 4B est une vue de détail de la figure 2, illustrant un exemple d'éléments de guidage et de maintien ;
- la figure 5 illustre un exemple d'équilibrage de la barre de tirage du dispositif de la figure 2, à l'aide de câbles circulant dans la barre de tirage.

Comme mentionné précédemment, l'invention propose une structure particulière de guidage et de maintien d'une toile d'occultation, mettant en oeuvre des moyens de guidage et de maintien discontinus associés à des rails bi-matière, comprenant une partie interne, en contact avec les moyens de guidage et de maintien, en plastique, et une partie externe métallique, dans laquelle est insérée la partie interne en plastique. Les moyens de guidage et de maintien peuvent être constitués d'une série d'éléments rapprochés et montés sur une bande souple, par exemple en tissu, solidarisée aux bords latéraux de la toile. Le profil des éléments de guidage et de maintien est conçu pour que le bord de la toile d'occultation et/ou la bande souple puisse circuler dans une fente d'ouverture des rails latéraux de guidage de la toile sans que les éléments de guidage et de maintien puisse sortir de cette fente.

On rappelle qu'un tel store manuel comprend une toile d'occultation solidaire par l'une de ses extrémités d'un tube d'enroulement, et, généralement, par l'autre de ses extrémités d'une barre de tirage (formant moyens d'entraînement de la toile), le tube d'enroulement étant habituellement couplé à des moyens de rappel élastiques pour assurer et/ou assister le ré-enroulement de la toile.

Notamment dans le cas des stores destinés à occulter des surfaces relativement larges, tel que par exemple des vitres de wagon ou des pavillons vitrés de véhicule, on prévoit également des rails de guidage du coulissement de la barre de tirage, celle-ci portant alors à chacune de ses extrémités des patins de coulissement, coopérant avec ces rails.

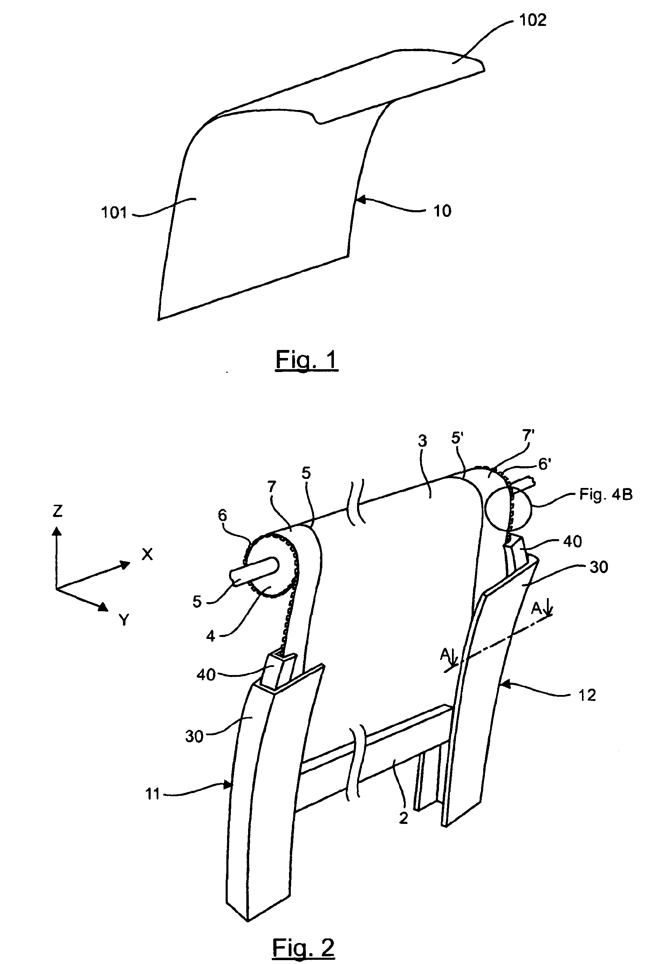

La figure 1 illustre un exemple de vitre galbé, destiné par exemple à un wagon ferroviaire. Comme on peut le constater, la vitre 10 est fortement galbée, et présente un rayon court en partie supérieure, de quelques dizaines de centimètres. La vitre 10 comprend donc une partie inférieure 101, sensiblement verticale, et une partie supérieure 102, galbée, et se terminant de façon sensiblement horizontale.

Cette forme originale de vitre permet d'offrir un nouveau design, et d'augmenter la luminosité à l'intérieur du wagon. Cependant, elle rend encore plus nécessaire la possibilité d'occultation, totale ou partielle, de la surface vitrée, notamment pour se protéger des rayons du soleil, lorsque ceux-ci sont verticaux ou proches de la verticale.

On comprend que la toile d'un store d'occultation classique s'étendrait de façon rectiligne, ce qui serait inacceptable, aussi bien pour des raisons d'efficacité de l'occultation que d'ergonomie, et notamment de diminution de l'espace intérieur utile.

Ceci serait aussi vrai dans le cas d'une vitre dont le galbe ne serait pas constant et qui présenterait alors un rayon plus court en partie supérieure.

On prévoit donc des rails 11 et 12, comme illustré sur la figure 2, s'étendant parallèlement aux bords latéraux de la vitre 10 de la figure 1 (et présentant donc le même galbe), et qui assurent le guidage d'une barre de tirage 2, reliée à une extrémité de la toile d'occultation 3. Bien sûr, ceci n'est pas suffisant pour empêcher que la toile 3 s'étende selon un plan, entre le tube enrouleur 4 et la barre de tirage 2.

Il faut encore que les bords latéraux de la toile 3 soient maintenus par les rails, pour que ceux-ci impriment à la toile 3 le galbe souhaité.

Pour obtenir ce résultat, notamment en présence d'un fort galbe (c'est-à-dire d'un petit rayon de courbure), l'invention propose une solution nouvelle, dont un mode de réalisation est décrit en relation avec la figure 2.

Ce mode de réalisation présente l'avantage d'être particulièrement simple à fabriquer et à mettre en oeuvre, et permet simplement et efficacement que les galbes que peut présenter la surface vitrée, notamment dans le sens de déploiement de la toile d'occultation soit imprimée à la toile d'occultation, sans que celle-ci tende à s'étendre dans un plan, poche sous l'effet de gravité, forme des plis et/ou se bloque.

La toile d'occultation 3 est mobile (selon l'axe Z de la figure 2) entre une position repliée dans laquelle elle est enroulée autour du tube d'enroulement 4 mobile en rotation autour d'un axe 5, et une position totalement déployée dans laquelle elle occulte au moins en partie la surface vitrée de la figure 1. Selon les cas, des positions de déploiement intermédiaires peuvent être prévues (définies par exemple par des crans d'arrêt prévus à cet effet dans les rails). On peut également prévoir des moyens permettant que la barre de tirage 2, et donc la toile 3, puisse être maintenue en toutes positions intermédiaires.

Selon l'invention, la toile présente sur ses bords latéraux 5, 5' des éléments de guidage et de maintien 6, 6', qui assurent le guidage et le maintien de ces bords latéraux dans les rails 11, 12, et impriment donc à la toile 3 le galbe souhaitée, pour que celle-ci s'étende sensiblement parallèlement à la surface vitrée.

La toile d'occultation peut être déplacée manuellement, à l'aide de la barre de tirage 2. Selon d'autres modes de réalisation, on peut prévoir un déplacement motorisé, selon différentes techniques connues.

Les éléments de guidage et de maintien 6, 6' s'étendent préférentiellement sur toute la longueur des bords latéraux 5, 5' de la toile. Ils sont montés sur une bande souple 7, 7' solidarisée aux bords latéraux 5, 5' de la toile 3 par piquage, par exemple. D'autres modes de solidarisation (ou de fixation) peuvent bien sûr être envisagés. Les bandes souples 7, 7' portant les éléments de guidage et de maintien 6, 6' pourront ainsi, par exemple, être solidarisés à la toile 3 par thermosoudage, collage ou par toute autre technique appropriée.

Les éléments de guidage et de maintien 6, 6' sont préférentiellement réalisés dans un matériau résistant présentant notamment de bonnes aptitudes au coulissement, c'est-à-dire présentant un faible coefficient de frottement, et générant un bruit limité, lors du déplacement. Ils pourront être réalisés notamment en plastique, et par exemple en polyéthylène.

Selon un mode de réalisation préférentiel, les éléments de guidage et de maintien 6, 6' se présentent sous la forme de plots, ou dents, espacés qui sont montés sur une bande en textile 7, 7', le cas échéant élastique, solidarisée à chaque bord latéral 5, 5' de la toile 3. L'élasticité des bandes 7, 7' peut permettre de garantir simplement et efficacement une tension suffisante de la toile 3, même en présence de jeux, par exemple dans le montage des rails.

Les dents sont dimensionnées pour ne pas pouvoir sortir de la fente ménagée dans les rails 11, 12, et pour assurer le guidage et le maintien souhaités, tout en limitant les frottements et tolérant les jeux.

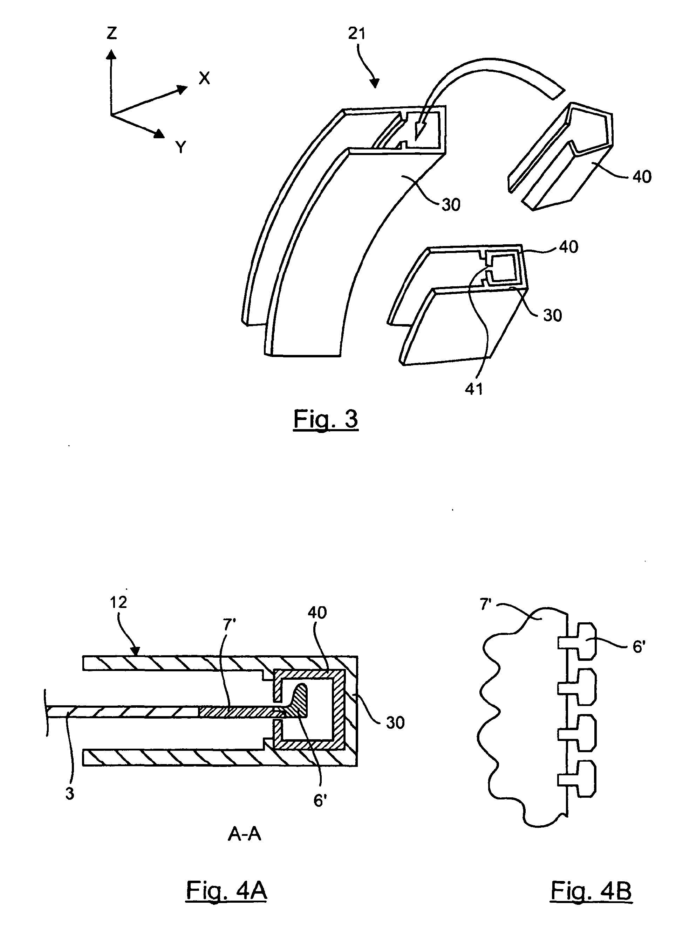

Les figures 4A et 4B illustrent, à titre indicatif, des sections envisageables pour les éléments de guidage et de maintien 6' qui coulissent dans le rail 21'.

Ainsi, chaque rail de guidage 11, 12 guide et maintient chaque extrémité latérale de la toile 3 par le biais des éléments de guidage et de maintien 6, 6' qui coulissent dans les rails de guidage 11, 12.

Selon un mode de réalisation simple et économique, chaque bande 7, 7' supportant la succession/rangée de plots, ou dents, se présente sous la forme d'une demi-fermeture à glissière, telle que les fermetures connues notamment sous la marque déposée « fermeture éclair ».

Les éléments de guidage et de maintien 6, 6' présentent préférentiellement une section de faible épaisseur de façon qu'ils n'augmentent pas considérablement le diamètre d'enroulement de la toile 3 sur le tube d'enroulement 4.

Les dents peuvent être espacées à intervalles réguliers, compris entre 0,5 et 5 mm par exemple, cette dimension correspondant sensiblement à la largeur des dents. Notamment, dans le cas d'une fermeture à glissière, les espaces entre les dents correspondent à la largeur des dents, pour permettre un engrenage, voir un entraînement automatique du déroulement de la toile.

On choisira avantageusement des dents ayant une forme symétrique, de façon que le déplacement soit similaire, dans les deux sens de déplacement.

Par ailleurs, les dents ont préférentiellement une faible épaisseur, avantageuse en ce qu'elle permet de ne pas trop perturber l'enroulement de la toile.

On peut prévoir que le diamètre du tube enrouleur 4 soit étagé et en particulier moins important au niveau de ces extrémités. En d'autres termes, le diamètre d'enroulement est sensiblement constant sur toute la longueur du tube enrouleur, lorsque la toile est complètement enroulée, du fait que le tube enrouleur présente un diamètre réduit au niveau des bords de toile. Ainsi, la surépaisseur due aux dents est compensée, au moins en partie.

L'utilisation d'une fermeture à glissière permet après assemblage avec la toile d'obtenir un bon guidage, et donc un bon alignement, de la toile selon les axes Z et X, lorsque celle-ci est déroulée.

La figure 3 illustre schématiquement un des rails de guidage d'un dispositif d'occultation selon un mode de réalisation de l'invention.

Les rails latéraux 11, 12 comprennent, dans ce mode de réalisation, un premier profil 30 préférentiellement réalisé dans un matériau rigide et solide dans lequel est inséré un deuxième profil 40 rectiligne ouvert, réalisé dans un matériau plastique, par exemple par extrusion.

Le profil 30 peut notamment être réalisé en acier ou en alliage d'aluminium. Tout autre matériau et mode d'obtention adaptés peuvent être mis en oeuvre.

Comme illustré sur la figure 3, le profil plastique 40 est introduit dans le profil aluminium galbé 30 et prend par conséquent la forme en galbe du profil 30. Le profil plastique 40 se pince de façon à obtenir une fente 41 très mince qui sert pour la retenue des éléments de guidage et de maintien 6, 6' montés sur les bords de toile qui coulissent dans le profilé en plastique 40 logé dans le profil en aluminium 30.

La combinaison proposée selon l'invention présente donc l'avantage de conserver l'avantage d'un rail plastique (faible frottement et faible bruit) tout en garantissant une bonne précision de l'ouverture de la fente 41, contrôlée par le profil métallique 30.

Le fait que les éléments de guidage et de maintien 6, 6' soient fabriquées en plastique et espacées de telle façon à frotter ponctuellement dans le profilé en plastique 40 permet d'obtenir un bon coefficient de frottement avec le rail de guidage, et un bruit réduit.

En outre, la faible ouverture de la fente 41 garantit le maintien des dents, malgré leur faible épaisseur, et la non intrusion d'insectes, de poussières ou de produit de nettoyage dans le profilé en plastique.

On notera que, dans le mode de réalisation de la figure 1, le profil plastique 40 dépasse de l'extrémité du profil aluminium 30 (galbé en Z) et est légèrement galbé en X de façon à revenir vers la toile, pour former un « entonnoir », facilitant l'insertion de la demi-fermeture à glissière (et plus précisément des dents, ou plus généralement des éléments de guidage et de maintien), et limiter ainsi le bruit de frottement de celle-ci.

Les rails latéraux 11, 12 sont solidarisés à la structure du véhicule, par exemple au moyen de vis. D'autres techniques de solidarisation, comme le clippage, le soudage, le brasage ou l'agrafage peuvent être utilisées.

Le système de guidage de la toile selon l'invention, notamment le fait que la bande souple traverse une fente ménagée dans le rail, permet d'éviter que la toile soit écartée des canaux de guidage de manière aisée par des courants d'air ou des actes volontaires (actes de vandalisme ou de curiosité notamment).

Par ailleurs, de nombreuses variantes ou améliorations peuvent être envisagées.

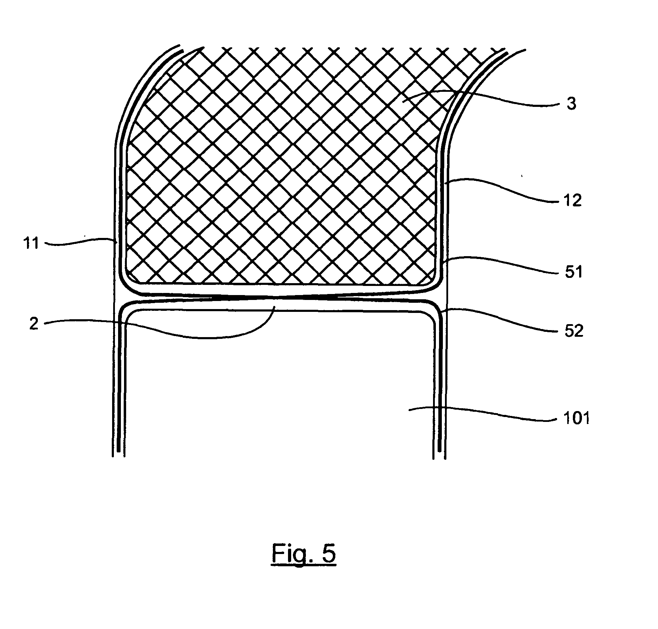

Ainsi, on peut prévoir un système d'équilibrage de la barre de tirage, à l'aide de câbles d'équilibrage 51, 52 circulant dans les rails et la barre de tirage, comme illustré par la figure 5. Cette approche, illustrée par exemple dans le document de brevet FR-08 56166, permet d'obtenir de façon simple et efficace la possibilité d'arrêter la barre de tirage en toutes positions le long des rails. Selon les cas et les applications, on pourra prévoir des moyens de freinage et/ou de blocage tels que décrits dans le document FR-08 56166, ou au contraire s'en affranchir.

Selon un autre mode de réalisation, on peut prévoir qu'un câble d'équilibrage unique circule dans la barre de tirage entre au moins deux éléments de guidage prévus à cet effet sur la barre de tirage, et dont les deux portions d'extrémité sont reliées à des moyens communs d'actionnement appliquant systématiquement aux portions d'extrémité une même distance de déplacement. Cette approche, décrite notamment dans le document de brevet FR-08 55186, est bien adaptée à un store motorisé.

Ainsi, le câble agit sur les deux extrémités de la barre de tirage de façon symétrique, assurant un équilibrage simple et efficace dans toutes les situations. L'équilibrage est mis en oeuvre directement sur la barre de tirage. Cette approche permet également de s'affranchir de problèmes de jeu et de variations d'entraxe entre les rails, au montage ou en fonction des variations de la température.

D'autres mises en oeuvre connues, motorisées et/ou manuelles, sont également aisément adaptables à l'approche de l'invention.

La technique selon l'invention s'applique notamment à l'occultation de baies vitrées de véhicules ferroviaires ou automobiles, par exemple pour une baie et/ou une ouverture ménagée dans le pavillon d'un véhicule.

Elle peut également s'appliquer à l'occultation de pavillons vitrés d'autres types de véhicules, comme les cabines de camion, les autobus, les tracteurs, de caravanes, de mobil-homes,...

L'invention peut également être adaptée, par exemple, pour recouvrir et dissimuler une zone de rangement de bagages, notamment pour un coffre de break ou de monospace.

## Revendications

1. Dispositif d'occultation d'au moins une partie d'une surface à occulter, par exemple une surface vitrée (10), comprenant au moins une toile d'occultation (3) mobile selon un axe de déploiement (Z) entre une position repliée et au moins une position déployée, dont une extrémité est montée sur un tube enrouleur (4), les bords latéraux (5, 5') de ladite toile d'occultation étant chacun guidés dans des rails de guidage et de maintien (11, 12),
**caractérisé en ce que** lesdits rails de guidage et de maintien (11,12) comprennent une partie en plastique (40) avec une fente insérée dans une partie métallique (30) et débordant d'une extrémité de la partie métallique (30), et **en ce que** chacun des bords latéraux (5,5') de ladite toile (3) porte une série d'éléments de guidage et de maintien (6, 6') discontinus, aptes à circuler dans ladite partie en plastique (40) d'un desdits rails (11, 12), la largeur desdits éléments de guidage et de maintien (6, 6'), dans une direction parallèle à l'axe d'un rail (11, 12), étant comprise entre 0,5 mm et 5 mm, et l'épaisseur desdits éléments de guidage et de maintien (6, 6') étant comprise entre 0,5 mm et 5 mm et supérieure à la largeur de ladite fente (41).

2. Dispositif d'occultation selon la revendication 1, **caractérisé en ce que** ladite série d'éléments de guidage et de maintien (6, 6') est solidarisée à une bande souple (7, 7') solidaire de ladite toile (3) et traversant la fente (41) ménagée dans ledit rail (11,12).

3. Dispositif d'occultation selon l'une quelconque des revendications 1 et 2, **caractérisé en ce que** l'espace entre deux éléments de guidage et de maintien (6, 6') consécutifs est inférieur ou égal à ladite largeur desdits éléments (6,6').

4. Dispositif d'occultation selon l'une quelconque des revendications 1 à 3, **caractérisé en ce que** lesdits éléments de guidage et de maintien (6, 6') s'étendent sensiblement sur toute la longueur de ladite toile d'occultation (3).

5. Dispositif d'occultation selon l'une des revendications précédentes, **caractérisé en ce que** lesdites bandes souples (7, 7') sont solidarisées à ladite toile d'occultation (3) par l'une au moins des techniques parmi le collage, le soudage, le thermosoudage et le piquage.

6. Dispositif d'occultation selon l'une des revendications précédentes, **caractérisé en ce qu'**une desdites bandes souples (7, 7') et lesdits éléments de guidage et de maintien (6, 6') correspondant constituent une demi-fermeture à glissière.

7. Dispositif d'occultation selon l'une des revendications précédentes, **caractérisé en ce qu'**au moins un desdits rails (11, 12) présentent une portion d'extrémité, au voisinage du tube enrouleur (4) de ladite toile (3), se rapprochant de ladite toile (3), de façon à faciliter l'introduction des éléments de guidage et de maintien (6, 6') dans ledit rail (11, 12).

8. Dispositif d'occultation selon l'une des revendications précédentes, **caractérisé en ce que** lesdits rails (11, 12) sont courbes, pour suivre le profil d'une surface vitrée galbée (10).

9. Dispositif d'occultation selon l'une des revendications précédentes, **caractérisé en ce qu'**il comprend deux câbles d'équilibrage (51, 52) circulant symétriquement dans une barre de tirage (2) de ladite toile (3) et dans lesdits rails (11, 12), et permettant un maintien de ladite barre de tirage (2) dans toute position déployée.

10. Dispositif d'occultation selon l'une des revendications précédentes, **caractérisé en ce qu'**il est mis en oeuvre pour occulter au moins une portion :
- d'un pavillon en verre ;
- d'un toit ouvrant ;
- d'une vitre latérale ;
- d'une vitre de hayon arrière ;
- d'un coffre à bagages ;
- d'une surface vitrée d'un véhicule ferroviaire.

11. Dispositif d'occultation selon l'une des revendications précédentes, **caractérisé en ce que** ladite toile (3) est montée sur un tube enrouleur (4) dont le diamètre est réduit au niveau où s'enroulent lesdites bandes souples (7, 7') et/ou lesdits éléments de guidage et de maintien (6, 6').

12. Véhicule automobile ou ferroviaire comprenant au moins un dispositif d'occultations selon l'une des revendications 1 à 11.

13. Procédé de fabrication d'un dispositif d'occultation selon l'une des revendications 1 à 11, **caractérisé en ce qu'**il comprend les étapes suivantes :
- obtention de deux rails de guidage et de maintien (11, 12), présentant une fente de passage (41), comprenant, pour chaque rail (11, 12), les étapes suivantes :
- obtention d'une partie de rail en plastique (40) avec une fente, par exemple par extrusion ;
- obtention d'une partie de rail métallique (30) ;
- insertion de ladite partie de rail en plastique (40) dans ladite partie de rail métallique (30) de sorte que ladite partie de rail plastique (40) déborde de ladite partie de rail métallique (30);
- solidarisation à une toile d'occultation (3) d'une série d'éléments de guidage et de maintien discontinus (6, 6'), aptes à circuler dans un desdits rails (11, 12),
- montage de ladite toile d'occultation (3) de façon que lesdits éléments de guidage et de maintien (6, 6') puissent circuler à l'intérieur dudit rail (11, 12),
la largeur desdits éléments de guidage et de maintien (6, 6'), dans une direction parallèle à l'axe d'un rail (11, 12), étant comprise entre 0,5 mm et 5 mm, et l'épaisseur desdits éléments de guidage et de maintien (6, 6') étant comprise entre 0,5 mm et 5 mm, et supérieure à la largueur de ladite fente.

14. Procédé selon la revendication 13, **caractérisé en ce que** ladite étape de solidarisation comprend une solidarisation de deux bandes souples (7, 7') à ladite toile (3), lesdites bandes souples portant chacune une série d'éléments de guidage et de maintien discontinus (6, 6'), et **en ce que** ladite étape de montage est effectuée de façon que chacune desdites bandes souples (7, 7') traverse la fente (41) du rail correspondant (11, 12).

## Claims

1. Screening-off device for at least part of a surface to be screened-off, for example a glazed surface (10), said device comprising at least one screening-off cloth (3) which is movable along an axis of deployment (Z) between a rolled-up position and at least one deployed position, and of which one end is mounted on a roller tube (4), the lateral edges (5, 5') said screening-off cloth being each guided in guiding and holding rails (11, 12),
**characterised in that** said guiding and holding rails (11, 12) comprise a plastic part (40) with a slot, inserted in a metal part (30) and protrudes from one end of the metal part (30),
and **in that** each of the lateral edges (5, 5') of said cloth (3) carries a series of discontinuous guiding and holding elements (6, 6') which are capable of moving within said plastic part (40) of one of said rails (11, 12), the width of said guiding and holding elements (6, 6'), in a direction parallel to the axis of a rail (11, 12), being between 0.5 mm and 5 mm, and the thickness of said guiding and holding elements (6, 6') being between 0.5 and 5 mm and greater than the width of said slot.

2. Screening-off device according to claim 1, **characterised in that** said series of guiding and holding elements (6, 6') is fastened to a flexible strip (7, 7') which is integral with said cloth (3) and passes through the slot (41) arranged in said rail (11, 12).

3. Screening-off device according to either of claims 1 and 2, **characterized in that** the space between two consecutive guiding and holding elements (6, 6') is smaller than, or equal to, said width of said elements (6, 6').

4. Screening-off device according to any of claims 1 to 3, **characterised in that** said guiding and holding elements (6, 6') extend substantially over the entire length of said screening-off cloth (3).

5. Screening-off device according to one of the preceding claims, **characterised in that** said flexible strips (7, 7') are fastened to said screening-off cloth (3) by at least one of the following techniques: gluing, welding, heat-sealing and stitching.

6. Screening-off device according to one of the preceding claims, **characterised in that** one of said flexible strips (7, 7') and the corresponding guiding and holding elements (6, 6') constitute half a zip fastener.

7. Screening-off device according to one of the preceding claims, **characterised in that** at least one of said rails (11, 12) has an end portion, in the vicinity of the roller tube (4) for said cloth (3), which comes closer to said cloth (3) so as to facilitate the introduction of the guiding and holding elements (6, 6') into said rail (11, 12).

8. Screening-off device according to one of the preceding claims, **characterised in that** said rails (11, 12) are curved in order to follow the profile of a curved glazed surface (10).

9. Screening-off device according to one of the preceding claims, **characterised in that** it comprises two counterbalancing cables (51, 52) which move symmetrically within a drawbar (2) belonging to said cloth (3) and within said rails (11, 12) and which make it possible to keep said drawbar (2) in any deployed position.

10. Screening-off device according to one of the preceding claims, **characterised in that** it is used to screen off at least a portion:
- of a glass roof;
- of an opening roof;
- of a side window ;
- of a rear hatchback window;
- of a luggage boot;
- of a glazed surface of a railway vehicle.

11. Screening-off device according to one of the preceding claims, **characterised in that** said cloth (3) is mounted on a roller tube (4), the diameter of which is reduced at the point at which the said flexible strips (7, 7') and/or the said guiding and holding elements (6, 6') are rolled-up.

12. Motor vehicle or railway vehicle comprising at least one screening-off device according to one of claims 1 to 11.

13. Method of manufacturing a screening-off device according to one of claims 1 to 11, **characterised in that** it comprises the following steps:
- obtaining two guiding and holding rails (11, 12) having a pass-through slot (41), said obtention comprising, in the case of each rail (11, 12), the following stages:
- obtaining a plastic rail part (40) with a slot, for example by extrusion;
- obtaining a metal rail part (30);
- inserting said plastic rail part (40) in said metal rail part (30) in such a way that the said plastic rail part (40) protrudes from said metal rail part (30);
- fastening, to a screening-off cloth (3), a series of discontinuous guiding and holding elements (6, 6') which are capable of moving within one of said rails (11, 12);
- mounting said screening-off cloth (3) in such a way that said guiding and holding elements (6, 6') are able to move inside said rail (11, 12), the width of the said guiding and holding elements (6, 6'), in a direction parallel to the axis of a rail (11, 12), being between 0.5 mm and 5 mm, and the thickness of said guiding and holding elements (6, 6') being between 0.5 mm and 5 mm and greater than the width of said slot.

14. Method according to claim 13, **characterised in that** said fastening step comprises a fastening of two flexible strips (7, 7') to said cloth (3), said flexible strips each carrying a series of discontinuous guiding and holding elements (6, 6'), and **in that** said mounting step is carried out in such a way that each of said flexible strips (7, 7') passes through the slot (41) in the corresponding rail (11, 12).

## Patentansprüche

1. Vorrichtung zum Verdunkeln mindestens eines Teils einer zu verdunkelnden Fläche, beispielsweise einer Glasfläche (10), umfassend mindestens einen Verdunkelungsvorhang (3), der entlang einer Ausbreitungsachse (Z) zwischen einer zurückgezogenen Position und mindestens einer ausgebreiteten Position beweglich ist, wobei ein Ende auf einem Aufwickelrohr (4) montiert ist und wobei die Seitenränder (5, 5') des Verdunkelungsvorhangs jeweils in Führungs- und Halteschienen (11, 12) geführt werden,
**dadurch gekennzeichnet, dass** die Führungs- und Halteschienen (11, 12) einen Kunststoffteil (40) mit einem Schlitz umfassen, der in einen metallischen Teil (30) eingesetzt ist und über ein Ende des metallischen Teils (30) hinausragt,
und dass jeder der Seitenränder (5, 5') des Vorhangs (3) eine Reihe von nichtdurchgängigen Führungs- und Halteelementen (6, 6') trägt, die in dem Kunststoffteil (11) einer der Schienen (11, 12) umlaufen können, wobei die Breite der Führungs- und Halteelemente (6, 6') in einer Richtung parallel zur Achse einer Schiene (11, 12) zwischen 0,5 mm und 5 mm beträgt, und wobei die Dicke der Führungs- und Halteelemente (6, 6') zwischen 0,5 mm und 5 mm beträgt und größer als die Breite des Schlitzes ist.

2. Verdunkelungsvorrichtung nach Anspruch 1, **dadurch gekennzeichnet, dass** die Reihe von Führungs- und Halteelementen (6, 6') an einem flexiblen Band (7, 7') befestigt ist, das mit dem Vorhang (3) verbunden ist und den in der Schiene (11, 12) vorgesehenen Schlitz (41) durchmisst.

3. Verdunkelungsvorrichtung nach einem der Ansprüche 1 und 2, bei welcher der Raum zwischen zwei aufeinander folgenden Führungs- und Halteelementen (6, 6') kleiner oder gleich der Breite der Elemente (6, 6') ist.

4. Verdunkelungsvorrichtung nach einem der Ansprüche 1 bis 3, **dadurch gekennzeichnet, dass** sich die Führungs- und Halteelemente (6, 6') im Wesentlichen entlang der gesamten Länge des Verdunkelungsvorhangs (3) erstrecken.

5. Verdunkelungsvorrichtung nach einem der vorhergehenden Ansprüche, **dadurch gekennzeichnet, dass** die flexiblen Bänder (7, 7') an dem Verdunkelungsvorhang (3) mittels mindestens einer der Techniken des Klebens, Schweißens, des Thermoschweißens oder Heftens befestigt sind.

6. Verdunkelungsvorrichtung nach einem der vorhergehenden Ansprüche, **dadurch gekennzeichnet, dass** eines der flexiblen Bänder (7, 7') und die entsprechenden Führungs- und Halteelemente (6, 6') einen Halbverschluss mit Gleitschiene darstellen.

7. Verdunkelungsvorrichtung nach einem der vorhergehenden Ansprüche, **dadurch gekennzeichnet, dass** mindestens eine der Schienen (11, 12) einen Endabschnitt benachbart zu dem Aufwickelrohr (4) des Vorhangs (3) aufweisen, der sich dem Vorhang (3) annähert, um die Einführung der Führungs- und Halteelemente (6, 6') in die Schiene (11, 12) zu erleichtern.

8. Verdunkelungsvorrichtung nach einem der vorhergehenden Ansprüche, **dadurch gekennzeichnet, dass** die Schienen (11, 12) gebogen sind, um dem Profil einer gewölbten Glasfläche (10) zu folgen.

9. Verdunkelungsvorrichtung nach einem der vorhergehenden Ansprüche, **dadurch gekennzeichnet, dass** sie zwei Ausgleichskabel (51, 52) umfasst, die symmetrisch in einer Zugstange (2) des Vorhangs (3) und in den Schienen (11, 12) umlaufen und ein Halten der Zugstange (2) in jeder ausgebreiteten Position ermöglichen.

10. Verdunkelungsvorrichtung nach einem der vorhergehenden Ansprüche, **dadurch gekennzeichnet, dass** er eingesetzt wird, um zumindest einen Abschnitt:
- eines Glashauses;
- eines Schiebedaches;
- einer Seitenscheibe;
- einer Heckscheibe;
- eines Gepäckraums;,
- einer Glasfläche eines Eisenbahnfahrzeugs
zu verdunkeln.

11. Verdunkelungsvorrichtung nach einem der vorhergehenden Ansprüche, **dadurch gekennzeichnet, dass** der Vorhang (3) auf einem Aufwickelrohr (4) montiert ist, dessen Durchmesser in dem Bereich, in dem die flexiblen Bänder (7, 7') und/oder die Führungs- und Halteelemente (6, 6') aufgewickelt werden, verringert ist.

12. Kraftfahrzeug oder Eisenbahnfahrzeug, umfassend mindestens eine Verdunkelungsvorrichtung nach einem der Ansprüche 1 bis 11.

13. Verfahren zur Herstellung einer Verdunkelungsvorrichtung nach einem der Ansprüche 1 bis 11, **dadurch gekennzeichnet, dass** es die folgenden Schritte umfasst:
- Erhalten von zwei Führungs- und Halteschienen (11, 12), die einen Durchgangsschlitz (41) aufweisen, für jede Schiene (11, 12) umfassend die folgenden Schritte:
- Erhalten eines Kunststoffschienenteils (40) mit einem Schlitz, beispielsweise durch Extrusion;
- Erhalten eines metallischen Schienenteils (30);
- Einsetzen des Kunststoffschienenteil (40) in den metallischen Schienenteil (30), so dass der Kunststoffschienenteil (40) über den metallischen Schienenteil (30) hinausragt;
- Befestigen einer Reihe von nicht durchgehenden Führungs- und Haltelementen (6, 6') mit einem Verdunkelungsvorhang (3), die geeignet sind, in einer der Schienen (11, 12) umzulaufen,
- Montage des Verdunkelungsvorhangs (3), so dass die Führungs- und
Halteelemente (6, 6') im Inneren der Schiene (11, 12) umlaufen können,
wobei die Breite der Führungs- und Halteelemente (6, 6') in eine Richtung parallel zur Achse einer Schiene (11, 12) zwischen 0,5 mmm und 5 mm beträgt, und die Dicke der Führungs- und Halteelemente (6, 6') zwischen 0,5 mm und 5 mm beträgt und größer als die Breite des Schlitzes ist.

14. Verfahren nach Anspruch 13, **dadurch gekennzeichnet, dass** der Schritt des Befestigens ein Befestigen von zwei flexiblen Bändern (7, 7') mit dem Vorhang (3) umfasst, wobei die flexiblen Bänder jeweils eine Reihe von nicht durchgehenden Führungs- und Halteelementen (6, 6') tragen, und dass der Schritt der Montage derart ausgeführt wird, dass jedes der flexiblen Bänder (7, 7') den Schlitz (41) der entsprechenden Schiene (11, 12) durchmisst.
